# EUROPÄISCHE PATENTSCHRIFT

(11) **EP 0 917 925 B1**
(45) Veröffentlichungstag und Bekanntmachung des Hinweises auf die Patenterteilung: **09.04.2003**
(21) Anmeldenummer: 98113456.2
(22) Anmeldetag: 18.07.1998
(51) Int. Cl.: B23K 26/14, A61C 1/00

(54) **Absauganlage für die Laserbearbeitung von Werkstücken in der Dentaltechnik**
Aspiration system for machining of workpieces in the dental technique
Système d'aspiration pour l'usinage dentaire au laser de pièces

(30) Priorität: 08.08.1997 DE 19734294
(43) Veröffentlichungstag der Anmeldung: 26.05.1999
(73) Patentinhaber: Degussa Dental GmbH, 63457 Hanau (DE)
(72) Erfinder: Völcker, Alexander, Dr., 63517 Rodenbach (DE); Geiger, Stephan, 85241 Prittlbach (DE)
(74) Vertreter: Stoffregen, Hans-Herbert, Dr. Dipl.-Phys.

(56) Entgegenhaltungen:
- DE-A- 3 800 050
- DE-A- 3 923 829
- DE-A- 4 239 829
- DE-U- 29 504 457

## Beschreibung

Der vorliegenden Erfindung liegt die Aufgabe zu Grunde, eine Anordnung zum Zu- und Abführen von Schutzgas zur Beseitigung von bei einer Laserbearbeitung eines Werkstükkes entstehenden Reaktionsprodukten in der Dentaltechnik, insbesondere zum Verschweißen von Prothesenteilen, umfassend eine konische Laserfokussiereinheit, eine entlang dieser verlaufende Schutzgaszuführung sowie eine die Laserfokussiereinheit konzentrisch umgebende Abgas absaugende erste Ringdüse zur Verfügung zu stellen.

In den letzten Jahren werden viele Verbindungsarbeiten in der Dentaltechnik und sonstigen technischen Bereichen mittels Laserschweißen durchgeführt. Solche Lasergeräte sind Stand der Technik.

Die Bearbeitung von Werkstücken mittels Laserstrahlen erfolgt normalerweise in Abwesenheit eines Schutzgases. Das Schutzgas erfüllt die Aufgabe, das Werkstuck während der Laserbearbeitung vor Oxidation zu schützen. Dieses Schutzgas kann beispielsweise direkt über die konische Laserfokussiereinheit oder mittels einer diese konzentrisch umgebende Ringdüse zugeführt werden. Bei der Bearbeitung entstehen meist gasförmige und feste Reaktionsprodukte, die teilweise reaktiv oder auch toxisch sein können und daher mit dem Schutzgas gezielt abgeführt werden müssen.

In der DE-OS 38 00 050 ist zum Beseitigen von pulverförmigem Bearbeitungsabfall das Werkzeug von einem ringförmigen Absaugkanal umgeben, der seinerseits von einer ringförmigen Düse umgeben ist, über die Druckluft senkrecht zum Werkstück eingeblasen wird, so daß sich ein Gasvorhang ergibt, der ein Austreten des Bearbeitungsabfalls verhindern soll. Hiermit kann man zwar pulverförmige Bearbeitungsabfälle beseitigen, nicht jedoch zugeführtes Schutzgas und die bei der Laserbearbeitung entstehenden gas- und dampfförmigen Reaktionsprodukte, da im Absaugkanal sich Turbulenzen bilden, was eine mögliche Kondensation der Reaktionsprodukte zur Folge hätte.

In der DE-PS 39 23 829 wird eine Absauganlage zum Beseitigen der bei der Bearbeitung von Werkstücken mittels Laserstrahlen entstehenden Reaktionsprodukten beschrieben. Die Absauganlage besteht aus einer Laserfokussiereinheit, innerhalb derer ein Schutzgas zugeführt werden kann. Am konisch zulaufenden Ende der Fokussiereinheit ist eine Absaughaube mit mehreren Öffnungen gasdicht befestigt, über die die Reaktionsprodukte abgesaugt werden. Aber auch hier lassen sich Turbulenzen in der Gasführung nicht vermeiden. Darüber hinaus ist diese Anlage zur Bearbeitung von flächigen Werkstücken vorgesehen. Ihre Bauart läßt eine Bearbeitung von kleinteiligen Werkstücken, wie es in der Dentaltechnik erforderlich ist, insbesondere Manipulationen im Arbeitsfeld des Laserstrahles, nicht zu.

In DE 295 04 457 wird ein Laserbearbeitungsgerät beschrieben, bei dem in die konische Fokussiereinheit tangential Luft oder Gas eingeblasen wird. Dieses erhält hierdurch einen Drall, so daß es tornadoartig durch diese Einheit geführt wird. Das Gas wird dann durch eine die Fokussiereinheit konzentrisch umgehende Ringdüse abgeführt. Diese Konstruktion hat die ausschließliche Funktion, die Laseroptik vor Verschmutzung zu schützen. Die sich im Bereich des Laserfokus zwangsläufig einstellende turbulente Strömung ist auch im Falle von Schutzgas nicht geeignet, das Werkstück vor Oxidation zu schützen. Diese Schrift bildet die Grundlage für den Oberbegriff der Ansprüche 1 und 2.

Der vorliegenden Erfindung liegt das Problem zu Grunde, eine Anordnung der eingangs genannten Art so weiterzubilden, dass im hinreichenden Umfang Reaktionsprodukte abgesaugt werden können, wobei ein gezieltes Entlangführen des abzusaugenden Gases entlang der Arbeitsebene des zu bearbeitenden Werkstücks erfolgen soll, um einerseits ein störungsfreies Bearbeiten zu ermöglichen und andererseits sicherzustellen, dass Reaktionsprodukte nicht unkontrolliert verteilt werden. Gleichzeitig soll ein hinreichender Abstand zwischen der Anordnung und der Arbeitsebene bestehen, um erforderliche Manipulationen vornehmen zu können.

Die Aufgabe wird durch eine Anordnung gemäß Anspruch 1 oder Anspruch 2 gelöst.

Durch die besondere Konstruktion der erfindungsgemäßen Anordnung stellt sich ein turbulenzfreier laminarer Gasfluss in der Arbeitsebene ein, ohne daß besondere Einbauten erforderlich wären. Hierdurch kann insbesondere ein für erforderliche Manipulationen ausreichender Abstand zum Werkstück eingehalten werden.

Vorteilhafterweise betragen die Düsenquerschnitte der beiden Ringdüsen jeweils 8 bis 11 mm zur Einstellung eines stationären Gasflusses von 5 bis 25 l/min. In der Ausführung gemäß Anspruch 2 hat die Düse einen Querschnitt von 8 mm bis 11 mm.

Die Schutzgaszuführung und die Absaugung erfolgen aus der gleichen Richtung und blockieren damit nicht weitere Raumbereiche, die dem Bearbeitungsobjekt unbeschränkt zur Verfügung stehen. Auch bei einem für die erforderlichen Manipulationen notwendigen Abstand des Gerätes von der Arbeitsebene ist durch die weitreichende laminare Strömung des Schutzgases ein ausreichender Schutz des Werkstückes vor Oxidation und eine effiziente Absaugung gewährleistet.

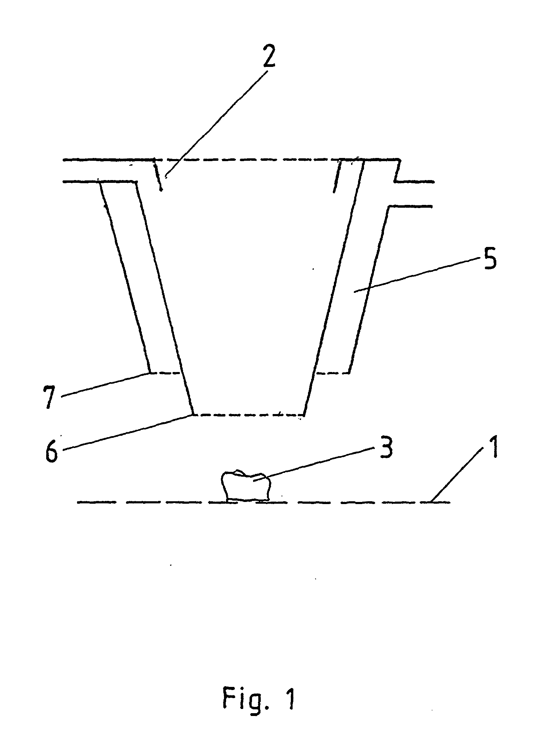

Fig. 1 zeigt schematisch eine beispielhafte Ausführungsform der Absauganlage im Längsschnitt. Der Laserstrahl wird dem Objekt (3) in der Arbeitsebene (1) über eine Fokussiereinheit (2) zugeführt. Die Fokussiereinheit (2) wird von Schutzgas durchströmt, wobei diese von einer Ringdüse (5) zur Abführung des Schutzgases und der Reaktionsprodukte umgeben ist. Die Unterkante (6) der Laserfokussiereinheit (2) überragt dabei die Unterkante (7) der Ringdüse (5) um 10 bis 25 mm.

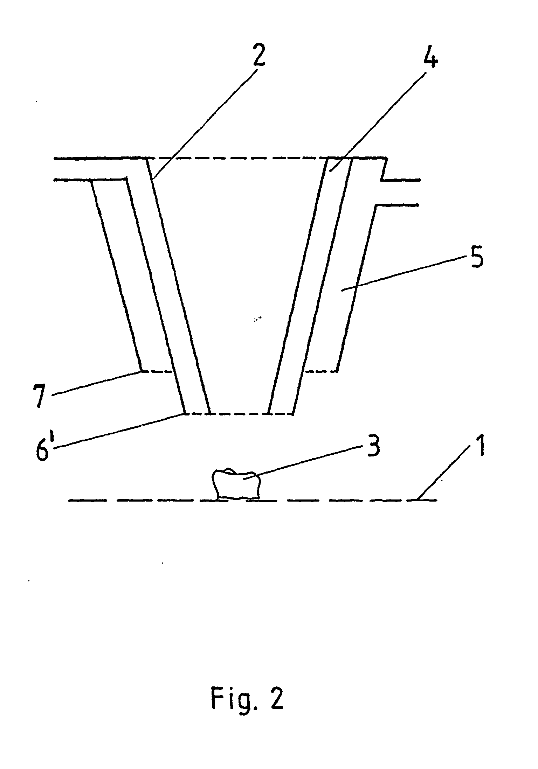

Fig. 2 zeigt schematisch eine weitere beispielhafte Ausführungsform der Absauganlage im Längsschnitt. Der Laserstrahl wird dem Objekt (3) in der Arbeitsebene (1) über eine Fokussiereinheit (2) zugeführt. Diese Fokussiereinheit (2) ist von einer Ringdüse (4) zur Zuführung des Schutzgases umgeben, wobei diese von einer weiteren Ringdüse (5) zur Abführung des Schutzgases und der Reaktionsprodukte umgeben ist. Die Unterkante (6') der Ringdüse (4) überragt dabei die Unterkante (7) der Ringdüse (5) um 10 bis 25 mm.

## Patentansprüche

1. Anordnung zum Zu- und Abführen von Schutzgas zur Beseitigung von bei einer Laserbearbeitung eines Werkstückes entstehenden Reaktionsprodukten in der Dentaltechnik, insbesondere zum Verschweißen von Prothesenteilen, umfassend eine konische Laserfokussiereinheit (2), eine entlang dieser verlaufende Schutzgaszuführung sowie eine die Laserfokussiereinheit konzentrisch umgebende Abgas absaugende erste Ringdüse (5),
**dadurch gekennzeichnet,**
**dass** die erste Ringdüse (5) eine die Schutzgaszuführung bildende zweite Ringdüse (4) umgibt und dass Unterkante (6, 6') der zweiten Ringdüse Unterkante (7) der ersten Ringdüse (5) um 10 mm bis 25 mm überragt.

2. Anordnung zum Zu- und Abführen von Schutzgas zur Beseitigung von bei einer Laserbearbeitung eines Werkstückes entstehenden Reaktionsprodukten in der Dentaltechnik, insbesondere zum Verschweißen von Prothesenteilen, umfassend eine konische Laserfokussiereinheit (2), eine entlang dieser verlaufende Schutzgaszuführung sowie eine die Laserfokussiereinheit konzentrisch umgebende Abgas absaugende Ringdüse (5),
wobei die Schutzgaszuführung über die konische Laserfokussiereinheit (2) erfolgt,
**dadurch gekennzeichnet,**
**dass** Unterkante (6) der Laserfokussiereinheit Unterkante (7) der ersten Ringdüse (5) um 10 mm bis 25 mm überragt und dass die Ringdüse (5) einen Düsenquerschnitt von 8 mm bis 11 mm aufweist.

3. Anordnung nach Anspruch 1,
**dadurch gekennzeichnet,**
**dass** die erste und die zweite Ringdüse (4, 5) jeweils einen Düsenquerschnitt von 8 mm bis 11 mm aufweist.

4. Anordnung nach Anspruch 1 oder 2,
**dadurch gekennzeichnet,**
**dass** im verwendung die Gaszu- und -abführung derart erfolgen, dass das Werkstück (3) in seiner Arbeitsebene einem turbulenzfreien laminaren Gasfluss ausgesetzt ist.

5. Anordnung nach Anspruch 1 und 2,
**dadurch gekennzeichnet,**
**dass** im verwendung über die erste und die zweite Ringdüse (4, 5) ein Gasfluss von 5 bis 25 l/min einstellbar ist.

## Claims

1. An arrangement for feeding and drawing off inert gas for removal of reaction products being caused by a laser processing of a work piece in dental technology, in particular for bonding of prosthesis parts, comprising a conic laser focusing unit (2), an inert gas feeding device extending along it as well as a waste gas absorbing first annular nozzle (5) concentrically surrounding the laser focusing unit,
wherein
the first annular nozzle (5) surrounds a second annular nozzle (4) forming the inert gas feeding device and lower edge (6, 6') of the second annular nozzle overtops lower edge (7) of the first annular nozzle (5) by 10 mm to 25 mm.

2. An arrangement for feeding and drawing off inert gas for removal of reaction products being caused by a laser processing of a work piece in dental technology, in particular for bonding of prosthesis parts, comprising a conic laser focusing unit (2), an inert gas feeding device extending along it as well as a waste gas absorbing annular nozzle (5) concentrically surrounding the laser focusing unit with the inert gas feeding occurring via the conic laser focusing unit (2),
wherein
lower edge (6) of the laser focusing unit overtops lower edge (7) of the first annular nozzle (5) by 10 mm to 25 mm and the annular nozzle (5) has a nozzle cross section by 8 mm to 11 mm.

3. Arrangement according to claim 1,
wherein
the first and second annular nozzle (4, 5) each has a nozzle cross section by 8 mm to 11 mm.

4. Arrangement according to claim 1 or claim 2,
wherein
in use the gas feeding and drawing off occur in such a way that the work piece (3) in its working plane is exposed to a turbulence free laminar gas flow.

5. Arrangement according to claim 1 or claim 2,
wherein
in use a gas flow of 5 to 25 l/min is adjustable via the first and second annular nozzle (4, 5).

## Revendications

1. Dispositif pour amener et évacuer du gaz protecteur destiné à éliminer des produits réactionnels formés lors d'un traitement au laser d'une pièce d'oeuvre dans la technique dentaire, en particulier pour souder des pièces de prothèse, comprenant une unité de focalisation du laser conique (2), une unité d'alimentation en gaz protecteur passant le long de celle-ci, ainsi qu'une première buse annulaire (5) aspirant le gaz perdu entourant de façon concentrique l'unité de focalisation du laser,
**caractérisé en ce que**
la première buse annulaire (5) entoure une deuxième buse annulaire (4) formant l'unité d'alimentation en gaz protecteur, et **en ce que** le bord inférieur (6, 6') de la deuxième buse fait saillie de 10 mm à 25 mm par rapport au bord inférieur (7) de la première buse annulaire (5).

2. Dispositif pour amener et évacuer du gaz protecteur destiné à éliminer des produits réactionnels formés lors d'un traitement au laser d'une pièce d'oeuvre dans la technique dentaire, en particulier pour souder des pièces de prothèse, comprenant une unité de focalisation du laser conique (2), une unité d'alimentation en gaz protecteur passant le long de celle-ci, ainsi qu'une buse annulaire (5) aspirant le gaz perdu entourant de façon concentrique l'unité de focalisation du laser, l'alimentation en gaz protecteur étant effectuée par l'unité de focalisation du laser conique (2),
**caractérisé en ce que**
le bord inférieur (6) de l'unité de focalisation du laser fait saillie de 10 mm à 25 mm par rapport au bord inférieur (7) de la première buse annulaire (5), et **en ce que** la buse annulaire (5) présente une section de buse de 8 mm à 11 mm.

3. Dispositif selon la revendication 1,
**caractérisé en ce que**
la première et la deuxième buses annulaires (4, 5) présentent chacune une section de buse de 8 mm à 11 mm.

4. Dispositif selon la revendication 1 ou 2,
**caractérisé en ce que**,
pendant l'utilisation, l'alimentation en gaz et l'évacuation du gaz ont lieu de sorte que, dans son plan de travail, la pièce d'oeuvre (3) est exposée à un flux de gaz laminaire exempt de turbulences.

5. Dispositif selon les revendications 1 et 2,
**caractérisé en ce que**,
pendant l'utilisation, le débit du flux de gaz émis par la première et la deuxième buses annulaires (4, 5) peut être réglé entre 5 et 25 l/min.
